(19) **Europäisches Patentamt European Patent Office Office européen des brevets**

(11) **EP 1 573 996 B1**

(12) **FASCICULE DE BREVET EUROPEEN**

(45) Date de publication et mention de la délivrance du brevet:
**11.09.2013 Bulletin 2013/37**

(21) Numéro de dépôt: **03796100.0**

(22) Date de dépôt: **15.12.2003**

(51) Int Cl.:
*H04L 5/00* (2006.01)     *H04H 20/46* (2008.01)

(86) Numéro de dépôt international:
**PCT/EP2003/051003**

(87) Numéro de publication internationale:
**WO 2004/056059 (01.07.2004 Gazette 2004/27)**

(54) **MODULATION D'UN SIGNAL NUMERIQUE DANS UNE BANDE DE FREQUENCES AFFECTEE PAR L'ÉVANOUISSEMENT SPATIAL**

MODULATION EINES DIGITALEN SIGNALS IN EINEM FREQUENZBAND WELCHES DURCH FADING BEEINTRÄCHTIGT IST

MODULATION OFA DIGITAL SIGNAL IN A FREQUENCY BAND WITH FADING

(84) Etats contractants désignés:
**AT BE BG CH CY CZ DE DK EE ES FI FR GB GR HU IE IT LI LU MC NL PT RO SE SI SK TR**

(30) Priorité: **17.12.2002 FR 0216007**

(43) Date de publication de la demande:
**14.09.2005 Bulletin 2005/37**

(73) Titulaire: **PL Technologies AG 8834 Schindellegi (CH)**

(72) Inventeurs:
• **LE BRETON, Bruno,**
**THALES Intellectual Property**
**94117 cedex ARCUEIL (FR)**
• **VASSEUR, Pierre,**
**THALES Intellectual Property**
**94117 cedex ARCUEIL (FR)**
• **BUREAU, Patrick,**
**THALES Intellectual Property**
**94117 cedex ARCUEIL (FR)**

(74) Mandataire: **Dreiss**
**Patentanwälte**
**Postfach 10 37 62**
**70032 Stuttgart (DE)**

(56) Documents cités:
**WO-A-00/31939**     **WO-A-98/58471**
**GB-A- 2 271 693**

• **WONG C Y ET AL: "MULTIUSER OFDM WITH ADAPTIVE SUBCARRIER, BIT, AND POWER ALLOCATION" IEEE JOURNAL ON SELECTED AREAS IN COMMUNICATIONS, IEEE INC. NEW YORK, US, vol. 17, no. 10, octobre 1999 (1999-10), pages 1747-1758, XP000854075 ISSN: 0733-8716**
• **LASSALLE R ET AL: "PRINCIPLES OF MODULATION AND CHANNEL CODING FOR DIGITAL BROADCASTING FOR MOBILE RECEIVERS" EBU REVIEW- TECHNICAL, EUROPEAN BROADCASTING UNION. BRUSSELS, BE, no. 224, 1 août 1987 (1987-08-01), pages 168-190, XP000560523 ISSN: 0251-0936**
• **BUREAU P ET AL: "DIGITAL BROADCASTING IN AM BANDS:A REALITY" ANNUAL BROADCAST ENGINEERING CONFERENCE PROCEEDINGS, XX, XX, avril 1998 (1998-04), pages 105-113, XP000826782**

## Description

L'invention concerne la modulation de signaux numériques sur une bande de fréquences utile donnée, notamment la bande FM, et la démodulation associée.

Les deux dernières décennies ont vu l'apparition de moyens de stockage audio d'excellente qualité. Cette qualité sonore a été obtenue, notamment, en stockant non plus le signal analogique mais sa version numérique. Ainsi, les disques compact numériques ont écrasés la radiodiffusion existante en terme de qualité du son reproduit. Cette différence de qualité sonore est si importante qu'elle a entraîné une modification du marché: les auditeurs préférant écouter des disques compacts audio à la radio.

Plusieurs normes de diffusion numériques ont alors été mise au point afin d'améliorer la qualité sonore du signal diffusé: DAB, DRM. La diffusion DAB (Digital Audio Broadcasting) mise au point pour remplacer à terme la la diffusion en FM offre l'avantage d'une grande robustesse au phénomène de multitrajetset est particulièrement bien adaptée à la réception en mobile. Mais, elle présente plusieurs inconvénients majeurs, le cot de déploiement en particulier pour un réseau à large couverture géographique, la nécessité de créer un bouquet de programmes ou de s'associer avec d'autres radio diffuseurs et enfin un cot relativement élevé des récepteurs.

La bande FM analogique étant saturée, la première idée pour augmenter la capacité de couverture locale fut d'utiliser en mode numérique DRM des émetteurs de faible puissance soit en onde moyenne soit dans le haut de la bande onde courtes (26 MHz) peu sollicitée par les radio diffuseurs internationaux. Pour cela, la bande AM de moins en moins écoutée en raison de la qualité médiocre du son reproduit devait être revalorisée. La solution proposée par la radiodiffusion DRM est la transmission du signal sous forme numérique dans la bande AM. La qualité sonore de la réception d'un système de diffusion numérique utilisant la bande AM selon la norme DRM en est considérablement améliorée: qualité sonore proche de celle de la diffusion FM analogique voire supérieure dans des conditions de réception soumises à des multi trajets avec des possibilité de services de données associés ou non au programme audio.

Comme tous les opérateurs de diffusion le savent, les ressources allouées à la radiodiffusion sont limitées. La bande AM, même utilisé en numérique, viendra vite à saturation. De plus, si l'utilisation de ces bandes AM pour de la couverture locale se revèle très efficace de jour, il est très difficile d'éliminer tout risque de propagation ionosphérique pouvant créer des interférences indésirables sur d'autres zones de couverture même très lointaine. Il serait donc intéressant de profiter des techniques de diffusion existantes en bande AM et de les transposer en bande FM.

Malheureusement, la bande FM présente un inconvénient majeur pour la transmission numérique. Il s'agit d'un environnement sévère sujet aux multi- trajets.

Donc, le problème principal de la bande FM est un problème de propagation appelé évanouissement (fading en anglais) spatial ou évanouissement plat. Cet évanouissement du signal est lié à un phénomène d'interférences locales et dépend de l'endroit o" se trouve le récepteur et de la fréquence.

On connait la demande de brevet internationale WO 00/31939 qui concerne une méthode de détermination de la division d'une bande de fréquence en sous-canaux de largeurs données pour des modems utilisant des techniques de modulation multi-porteuses. La présente invention permet de palier aux inconvénients précités en utilisant le principe que l'évanouissement est différent suivant la fréquence utilisée. Le signal numérique est divisé en plusieurs blocs, chacun étant transmis sur la bande dans un canal séparé des canaux de transmission des autres blocs. Ainsi, lorsque le signal s'évanouit sur une fréquence, seul un bloc est affecté: il n'y a pas de perte brutale de l'information.

L'invention a pour objet un procédé de modulation d'un signal numérique de largeur L en fréquence sur une bande de fréquences utile donnée comportant les étapes suivantes:

- Une séparation du signal numérique en N blocs $b_n$, $(1 < n < N)$,
- Un découpage de la bande de fréquences utile donnée en N parties P, contigües,
- Une définition de canaux $C_n$ de largeur $I_n$, en fréquence, compris dans une partie Pn associée, les canaux $C_n$ étant séparés et définis en tenant compte d'une distance minimale prédéterminée entre les canaux,
- Une répartition de chaque bloc de signaux numériques $b_n$ sur le canal $C_n$ associé, ledit procédé étant caractérisé en ce que qu'il comporte en outre une etape de détermination de la distance minimale entre les canaux, la distance minimale étant déterminée en fonction du nombre N de canaux, de leur largeur $I_n$ et de la largeur moyenne de bande de fréquences affectée par le phénomène de fading plat.

Un autre objet de l'invention est le modulateur de signaux numériques sur une bande de fréquences utile donnée mettant en oeuvre ce procédé de modulation.

De plus, l'invention a pour objet un émetteur de signaux numériques sur une bande de fréquences utile donnée comportant au moins une chaîne d'émission comportant un modulateur tel que celui décrit ci-dessus. La chaîne d'émission comporte un codeur correcteur d'erreurs transmettant au modulateur le signal numérique codé.

Dans une variante de l'invention est proposé l'utilisation de l'émetteur décrit ci-dessus pour la transmission de signaux numériques dans la bande FM.

Les caractéristiques et avantages de l'invention apparaîtront plus clairement à la lecture de la description, faite à titre d'exemple, et des figures s'y rapportant qui représentent:

- Figure 1, une représentation fréquentielle générale de l'utilisation de la bande de fréquences utile donnée lors de l'émission 20 d'un signal numérique selon l'invention,

- Figure 2, une représentation fréquentielle d'un exemple d'utilisation de la bande FM lors de l'émission d'un signal numérique sur deux canaux distincts selon l'invention,

- Figure 3, une représentation fréquentielle générale de 25 l'utilisation de la bande de fréquence utile donnée lors de l'émission de plusieurs signaux numériques selon l'invention,

- Figure 4, un schéma simplifié d'un modulateur de signaux numériques sur une bande de fréquences utile donnée selon l'invention,

- Figure 5, un schéma simplifié d'un démodulateur de signaux numériques transmis sur une bande de fréquences utile donnée,

- Figure 6, un schéma simplifié d'un émetteur de signaux numériques sur une bande de fréquences utile donnée comportant plusieurs chaîne d'émission selon l'invention,

- Figure 7, un schéma simplifié d'un récepteur de signaux numériques transmis sur une bande de fréquences utile donnée.

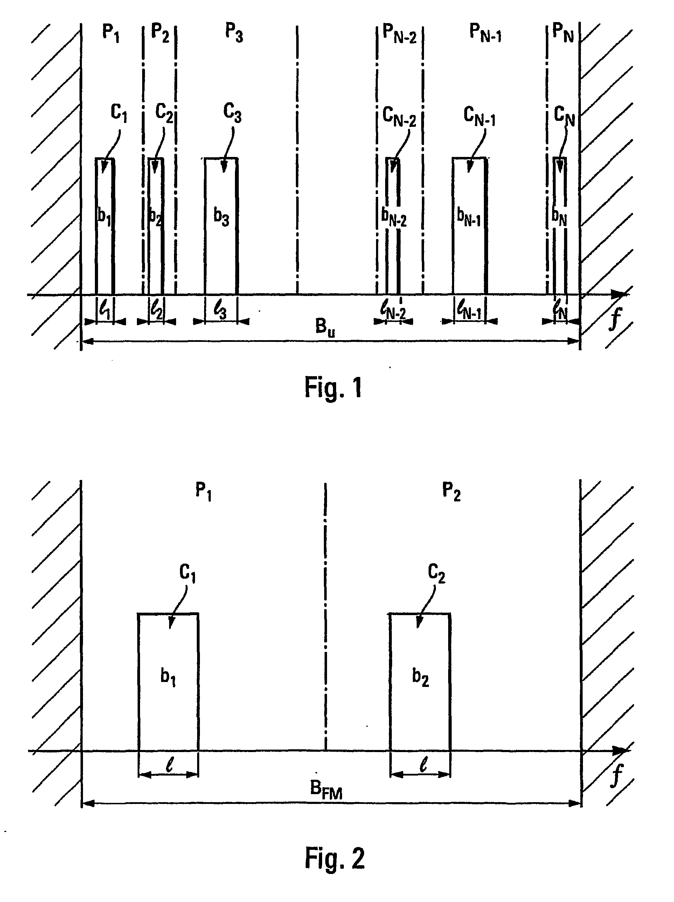

La figure 1 représente l'utilisation de la bande de fréquences utile donnée $B_u$ par le signal numérique lors de son émission. Le procédé de modulation selon l'invention divise le signal numérique $s[m]$ en $N$ blocs $b_1$ à $b_N$. Le signal numérique $s[m]$ ayant une largeur en fréquence égale à L, chacun des $N$ blocs $\{b_n\}_{(1 \leq n \leq N)}$ a une largeur en fréquence respective $l_n$ telle que leur somme soit égale à celle du signal $s[m] : \sum_{n=1}^{N} l_n = L$. La bande de fréquences utile donnée est quant à elle divisée en $N$ partie $P_n$. Dans, chacune de ces parties $P_n$ est définie un canal $C_n$ de largeur $l_n$ dans lequel sera répartie le signal du bloc $b_n$ associé.

Les largeurs $l_n$ des canaux $C_n$ peuvent être tous différents $(l_1 \neq l_2 \neq \cdots \neq l_N)$, égaux $(l_1 = l_2 = \cdots = l_N)$ ou encore certains peuvent être égaux et d'autres différents $(l_f = l_g = \cdots = l_h, \cdots l_i = l_j = \cdots = l_k$ et $l_a \neq l_b \neq \cdots \neq l_c$ $l_e \neq l_f \neq \cdots \neq l_g, 1 \leq a, b, c, f, g, h, i, j, k \leq N)$. Si les $N$ canaux $C_n$ sont de largeurs identiques, leur largueur est égale à un $N$ ième de la largueur du signal numérique L: $l_n = L/N, \forall 1 \leq n \leq N$.

Lors de la définition des canaux $C_n$, ceux-ci sont séparés. Cette séparation est égale à une distance minimale prédéterminée. La distance minimale entre les canaux $C_i$ et $C_{i+1}$ peut être différente de celle prédéterminée entre les canaux $C_j$ et $C_{j+1}$. La distance minimale est déterminée en fonction du nombre $N$ de canaux $\{C_n\}$, de leur largeur $l_n$, et de la largeur moyenne de bande de fréquences affectée par le phénomène de fading plat. Cette distance minimale permet qu'un nombre prédéterminé maximum de blocs $\{b_n\}$ soit affecté par le phénomène d'évanouissement plat (« fading » plat selon la terminologie anglosaxonne). Ainsi, la perte d'information n'est pas brutale. Ce nombre maximum peut être déterminé tel qu'une minorité de canaux $C_n$/blocs $b_n$ soit affectée.

Ce procédé de modulation peut donc être utilisé pour la transmission sur toutes bandes de fréquences susceptibles d'être affectées par le phénomène de fading plat, en particulier la bande FM.

La figure 2 représente l'utilisation de la bande FM $B_u$ par le signal numérique lors de son émission. Dans le cas illustré par la figure 2, la modulation proposée est une version simplifiée du procédé de modulation selon l'invention. En effet, le procédé de modulation divise le signal numérique $s[m]$ en deux blocs $b_1$ et $b_2$. Le signal numérique $s[m]$ ayant une largeur en fréquence égale à L, chacun des deux blocs $b_1$ et $b_2$ a une largeur en fréquence respective $l_1$ et $l_2$ telle que leur somme soit égale à celle du signal $s[m]$: $l_1 + l_2 = L$. Dans le cas de la figure 2, les largeurs des deux blocs $b_1$ et $b_2$ sont égales $l_1 = l_2 = l = L / 2$. La bande FM est quant à elle divisée en deux parties $P1$ et $P2$. Dans, chacune de ces parties $P1$ et $P2$ est définie un canal $C_1$, respectivement $C_2$, de largeur $L$ dans lequel sera répartie le signal du bloc $b_1$, respectivement $b_2$, associé. Afin de transposer la norme DRM à la bande FM, les blocs $b_1$ et $b_2$ pourront être de $l = 20$ kHz de largeur.

La bande de fréquences, quelle que soit son utilisation peut être occupée par plusieurs signaux numériques provenant d'un ou plusieurs opérateurs. Par exemple, plusieurs opérateurs se partage la bande FM pour diffuser des émissions radiophoniques.

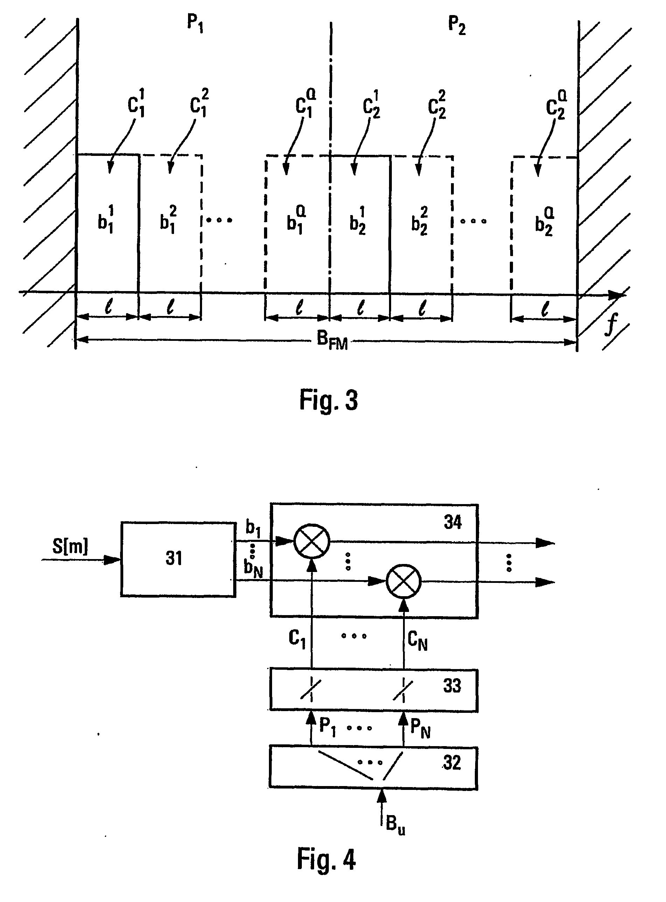

La figure 3 illustre ce partage de la bande FM par plusieurs signaux numériques. Chacun des Q signaux $\{s^q [m]\}_{(1 \leq q \leq Q)}$ est divisé en deux blocs $b_1^q$ et $b_2^q$. Comme sur la figure 2, la bande FM est découpée en deux parties $P_1$ et $P_2$. Dans, chacune de ces parties $P_1$ et $P_2$ sont définis Q canaux $C_1^q$, respectivement $C_2^q$, de largeur $l$. Dans chaque canal $C_n^q$ est réparti le signal du bloc $b_n^q$ associé. Lorsqu'une ou plusieurs distances minimales sont déterminées pour les canaux $\{C_n^1\}$, sur lesquels sont répartis les blocs $b_n^1$ d'un signal $s^1 [m]$, elles sont identiques pour les canaux $\{C_n^q\}$, sur lesquels

sont répartis les blocs $b_n^q$ de tous les signaux $s^q[m]$.

Le nombre de parties $P_n$ n'est pas limité à deux, mais peut dépendre de la largeur moyenne de bande de fréquences affecté par le fading plat. Par exemple, la bande de fréquences utile donnée peut être divisé en partie ayant une largeur égale à la largeur moyenne de bande de fréquences affecté par le fading plat.

La largeur des canaux $C_n^q$ n'est pas nécessairement identique dans toutes les parties $P_n$. Mais, la largeur de tous les canaux $C_n^q$ d'une partie $P_1$ donnée est identique ($l_i^1 = l_i^2 = ... = l_i^Q$).

La figure 4 propose un schéma bloc simplifié du modulateur selon l'invention. Le modulateur 30 reçoit un signal numérique $s[m]$ à l'entrée de ses moyens de séparation 31 du signal numérique en $N$ blocs $b_n$. Le modulateur 30 reçoit les caractéristiques de la bande de fréquence utile donnée $B_u$ dans laquelle le signal $s[m]$ doit être émis. La connaissance par ces caractéristiques de la bande de fréquence utile donnée $B_u$ permet aux moyens de découpage 32 de diviser la bande $B_u$ en $N$ parties $P_n$. Les caractéristiques des $N$ parties $P_n$ sont transmises par les moyens de découpage 32 aux moyens de définition 33. Les moyens de définition 33 détermine le canal $C_n$ de largueur $l_n$ correspondant à chacune des $N$ parties $P_n$. A chaque canal $C_n$ correspond un bloc $b_n$ de même largeur $l_n$. Ainsi, les $N$ blocs de signaux $b_n$ en sortie des moyens de séparation et les caractéristiques des $N$ canaux $C_n$ en sortie des moyens de définition 33 sont transmis à l'entrée des moyens de répartition 34. Les moyens de répartition 34 affectent chaque bloc $b_n$ au canal $C_n$ associé permettant d'obtenir une répartition du signal sur la bande de fréquence utile donnée $B_u$ tel que représenté par la figure 1.

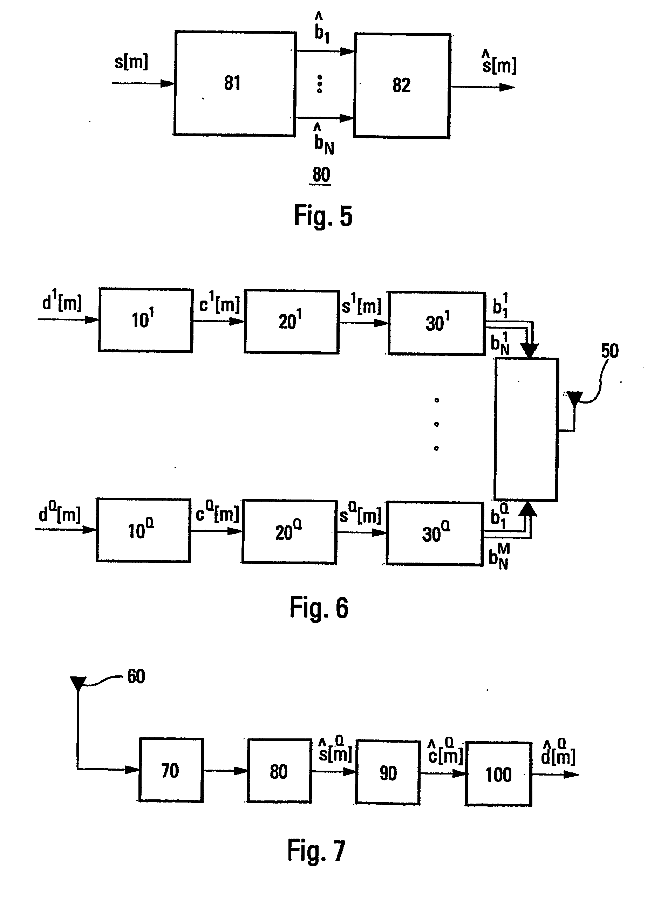

La figure 5 propose une représentation sous la forme d'un schéma blocs simplifié d'un démodulateur 80 de signaux numériques transmis sur une bande de fréquences utile donnée par un émetteur comportant un modulateur tel que celui illustré par la figure 4. Le signal reçu $r[m]$ est de la forme de celui représenté par la figure 1. Ce signal reçu $r[m]$ est transmis à des moyens de balayage 81 des $N$ canaux $C_n$. Les moyens de balayage 81 extraient de chacun de ces $N$ canaux $C_n$ le bloc $\hat{b}_n$ reçu correspondant au bloc $b_n$ émis. Les $N$ blocs $\hat{b}_n$ lus sont transmis aux moyens de recombinaison 82. Ces moyens de recombinaison 82 reconstitue à partir des $N$ blocs $\hat{b}_n$ lus dans les $N$ canaux $C_n$ un signal numérique $\hat{s}[m]$ correspondant au signal $s[m]$ émis sous la forme des $N$ blocs $b_n$.

La figure 6 illustre un émetteur selon l'invention. L'émetteur proposé comporte Q chaînes d'émission, une par signal à émettre dans la bande de fréquences utile donnée. Chaque chaîne reçoit les données à émettre $d^q[m]$. Ces données $d^q[m]$ peuvent, par exemple, être codées par un code correcteur d'erreurs $10^q$. Les données codées $c^q[m]$ peuvent être mélangées, notamment, à l'aide d'un entrelaceur $20^q$. Le signal $s^q[m]$ est obtenu en sortie de tous les pré-traitements de la chaîne d'émission, tels que le codage correcteur d'erreur et l'entrelacement, et est alors traité par le modulateur $30^q$ selon l'invention.

Si l'émetteur (telle que celui illustré par la figure 6) comporte, plusieurs chaîne d'émission, les blocs $b_n^q$ de chacune des Q chaînes d'émission peut être transmis à un multiplexeur 40 relié à une antenne 50. Lorsque la bande de fréquences utile données est divisée en deux parties, la répartition des signaux émis par l'antenne 50 peut être représentée telle que sur la figure 3.

Si l'émetteur ne comporte qu'une chaîne d'émission, le modulateur 30 peut être relié directement à l'antenne 50. La répartition des signaux par les différents émetteurs sur la bande de fréquence utile donnée peut être effectuée en allouant aux émetteurs utilisant cette bande : le nombre N de parties, la ou les distances minimales entre les canaux et une fréquence à partir desquels l'émetteur sera capable de définir grâce aux moyens de définition 33 du modulateur 30 les canaux sur lesquels ils peut émettre sans interférer avec les autres émetteurs partageant cette bande.

La figure 7 illustre un récepteur. Ce récepteur de signaux numériques est adapté à la réception de signaux numériques transmis sur une bande de fréquences utile donnée par un émetteur tel que celui de la figure 6.

L'antenne 60 transmet les signaux reçus sur la bande de fréquence utile donnée à des moyens de sélection 70. Ces moyens de sélection transmettent au démodulateur 80 le signal reçu $r[m]$ et les caractéristiques des canaux $C_n^q$ comportant les blocs $b_n^q$ du signal $s^q[m]$ que le récepteur doit reproduire. Le démodulateur 80 recombine ainsi les blocs $\hat{b}_n^q$ lus dans les N canaux $C_n^q$ en un signal $\hat{s}^q[m]$ correspondant au signal $s^q[m]$ émis.

Si l'émetteur comporte un entrelaceur 20, le récepteur comportera un désentrelaceur 90 associé afin de remettre en ordre le signal démodulé $\hat{s}^q[m]$. Le signal désentrelacé $\hat{c}^q[m]$ est transmis à un décodeur 100 lorsque l'émetteur comporte aussi un codeur de canal 10. Le décodeur 100 est associé au codeur de canal 20. En sortie du décodeur 100, le récepteur fournit les données $\hat{d}^q[m]$ correspondant aux données émises $d^q[m]$.

Le récepteur peut aussi être envisagé avec un décodeur 100 et sans désentrelaceur 90, lorsque l'émetteur comporte un codeur 10 mais pas d'entrelaceur 20. La sortie du démodulateur 80 est alors relié directement à l'entrée du décodeur 100.

L'ensemble des dispositifs décrits par les figure 4 à 7 peuvent être utilisé pour la transmission numérique dans la bande FM , notamment pour la radiodiffusion. La qualité sonore ainsi obtenue avoisine celle des moyens de stockages audio numériques telle que celle du disque compact. En outre, la bande FM à l'avantage de permettre la diffusion de programme locaux : programmes musicaux régionaux, retransmission locale de concerts.

**Revendications**

1. Procédé de modulation d'un signal numérique de largeur L en fréquence sur une bande de fréquences utile donnée comportant les étapes suivantes:

   - Une séparation du signal numérique en N blocs $b_n$, $(1 < n < N)$,
   - Un découpage de la bande de fréquences utile donnée en N parties $P_n$ contigües,
   - Une définition de canaux $C_n$, de largeur $l_n$ en fréquence, compris dans une partie $P_n$ associée, les canaux $C_n$ étant séparés et définis en tenant compte d'une distance minimale prédéterminée entre les canaux,
   - Une répartition de chaque bloc de signaux numériques $b_n$ sur le canal $C_n$ associé,

   ledit procédé étant **caractérisé en ce que** qu'il comporte en outre une étape de détermination de la distance minimale entre les canaux, la distance minimale étant déterminée en fonction du nombre N de canaux, de leur largeur $l_n$ et de la largeur moyenne de bande de fréquences affectée par le phénomène de fading plat.

2. Procédé de modulation selon la revendication précédente **caractérisé en ce que** la distance minimale est déterminée de telle sorte qu'une minorité de canaux $C_n$ soient affectés par le phénomène de fading plat.

3. Procédé de modulation selon l'une quelconques des revendications précédentes **caractérisé en ce que** les canaux $C_n$ sont de largeurs identiques et égales à un Nième de la largeur du signal numérique L: $l_n = L / N, \forall 1 < n < N$.

4. Procédé de modulation numérique selon l'une quelconques des revendications précédentes **caractérisé en ce que**:

   - Le signal numérique est séparé en N = 2 blocs $b_n$,
   - La bande de fréquences utile donnée est découpée en N = 2 parties $P_n$,
   - Le premier bloc $b_1$ est réparti sur un canal $C_1$ de largueur L/2 compris dans la première partie $P_1$ de la bande de fréquences utile donnée et le deuxième bloc $b_2$ est réparti sur un canal $C_2$ de largueur L/2 compris dans la deuxième partie $P_2$ de la bande de fréquences utile donnée.

5. Procédé de modulation selon l'une quelconque des revendications précédentes **caractérisé en ce que** la bande de fréquences utile donnée est la bande FM.

6. Modulateur de signaux numériques sur une bande de fréquences utile donnée pour la mise en oeuvre du procédé selon l'une quelconque des revendications 1 à 5.

7. Emetteur de signaux numériques sur une bande de fréquences utile donnée comportant au moins une chaîne d'émission q comportant un modulateur selon la revendication 6 **caractérisé en ce que** la chaîne d'émission comporte un codeur correcteur d'erreurs (10) transmettant au modulateur (30) le signal numérique codé $c^q[m]$.

8. Emetteur selon la revendication précédente **caractérisé en ce que** la chaîne d'émission q comporte un entrelaceur (20) placé entre le codeur correcteur d'erreurs (10) et le modulateur (30).

9. Emetteur selon l'une quelconque des revendications 7 ou 8 - **caractérisé en ce que** à chaque chaîne d'émission q est associé un ensemble de canaux $\{C_n^q\}$ distinct.

10. Utilisation de l'émetteur selon l'une quelconques des revendications 7 à 9 pour la transmission de signaux numériques dans la bande FM.

**Patentansprüche**

1. Verfahren zur Modulation eines digitalen Signals der Frequenzbreite L auf einem gegebenen nützlichen Frequenzband umfassend die folgenden Schritte:

   - Aufteilen des digitalen Signals in N Blöcke $b_n$, $(1 < n < N)$,
   - Zerschneiden des gegebenen nützlichen Frequenzbandes in N zusammenhängende Teile $P_n$,
   - Definieren von Kanälen $C_n$ der Frequenzbreite $l_n$ enthalten in einem damit verbundenen Teil $P_n$, wobei die Kanäle getrennt und definiert sind in Bezug auf einen vorbestimmten definierten Mindestabstandes zwischen den Kanälen,
   - Verteilen eines jeden Blocks der digitalen Signale $b_n$ auf den zugeordneten Kanal $C_n$,

   wobei das Verfahren **dadurch gekennzeichnet ist, dass** es außerdem einen Schritt der Bestimmung das Mindestabstands zwischen den Kanälen umfasst, wobei der Mindestabstand als eine Funktion der Anzahl N der Kanäle, der Breite $l_n$ und der die mittleren Breite des Frequenzbandes, welches von dem Phänomen des Flachschwunds betroffen ist, bestimmt wird.

**2.** Modulationsverfahren nach dem vorhergehenden Anspruch, **dadurch gekennzeichnet, dass** der Mindestabstand so bestimmt wird, dass eine Minderheit der Kanäle $C_n$ vom Phänomen des Flachschwunds betroffen ist.

**3.** Modulationsverfahren nach einem der vorhergehenden Ansprüche, **dadurch gekennzeichnet, dass** die Breiten der Kanäle identisch und gleich einer N-ten Breite des digitalen Signals L: $I_n = L / N$, $\forall\ 1 < n < N$ sind.

**4.** Modulationsverfahren nach einem der vorhergehenden Ansprüche, **dadurch gekennzeichnet, dass**

- das digitale Signal in N = 2 Blöcke $b_n$ aufgeteilt wird,
- das gegebene nützliche Frequenzband in N = 2 Teile $P_n$ zerschnitten wird,
- der erste Block $b_1$ über einen Kanal $C_1$ der Breite L/2 verteilt wird, welcher im ersten Teil $P_1$ des gegebenen nützlichen Frequenzband enthalten ist und der zweite Block $b_2$ über einen Kanal $C_2$ der Breite L/2 verteilt wird, welcher im zweiten Teil $P_2$ des gegebenen nützlichen Frequenzbandes enthalten ist.

**5.** Modulationsverfahren nach einem der vorhergehenden Ansprüche, **dadurch gekennzeichnet, dass** das gegebene nützliche Frequenzband das FM Band ist.

**6.** Modulator für digitale Signale über ein gegebenes nützliches Frequenzband für die Durchführung des Verfahrens nach einem der Ansprüche 1 bis 5.

**7.** Sender für digitale Signale auf einem gegebenen nützlichen Frequenzband umfassend wenigstens eine Übertragungskette umfassend einen Modulator nach Anspruch 6, **dadurch gekennzeichnet, dass** die Übertragungskette einen Fehlerkorrekturcodierer (10) umfasst, welcher an den Modulator (30) das codierte digitale Signal $c^q[m]$ überträgt.

**8.** Sender nach dem vorhergehenden Anspruch, **dadurch gekennzeichnet, dass** die Übertragungskette einen Interleaver (20) umfasst, der zwischen dem Fehlerkorrekturcodierer (10) und dem Modulator (30) platziert ist.

**9.** Sender nach einem der Ansprüche 7 oder 8, **dadurch gekennzeichnet, dass** jeder Übertragungskette ein unterscheidbarer Satz von Kanälen $\{C_n^q\}$ zugeordnet ist.

**10.** Verwendung des Senders nach einem der Ansprüche 7 bis 9 für die Übertragung von digitalen Signalen im FM Band.

**Claims**

**1.** Method of modulating a digital signal of width L in frequency on a given useful frequency band comprising the following steps:

- separating the digital signal into N blocks $b_n$, (1 < n < N),
- splitting the given useful frequency band into N contiguous parts $P_n$,
- defining channels $C_n$, of width $I_n$ in frequency lying within an associated part $P_n$, the channels $C_n$ being separated and defined by taking account of a predetermined minimum distance between the channels,
- distributing each block of digital signals $b_n$ over the associated channel $C_n$,

wherein the method is **characterized in that** it furthermore comprises a step of determining the minimum distance between the channels, wherein the minimum distance is determined as a function of the Number N of channels, of their width $I_n$, and of a mean width of the frequency band affected by the phenomenon of flat fading.

**2.** Method of modulation according to the preceding claim, **characterized in that** the minimum distance is determined such that a minority of channels $C_n$ are affected by the phenomenon of flat fading.

**3.** Method of modulation according to one of the preceding claims, **characterized in that** the channels $C_n$ are of identical widths equal to an Nth of the width of the digital signal L: $I_n = L / N$, $\forall\ 1 < n < N$.

**4.** Method of modulation according to one of the preceding claims, **characterized in that**:

- the digital signal is separated into N = 2 blocks $b_n$,
- the given useful frequency band is split into N = 2 parts $P_n$,
- a first block $b_1$ is distributed over a channel $C_1$ of width L/2 lying within a first part $P_1$ of the given useful frequency band and a second block $b_1$ is distributed over a channel $C_2$ of width L/2 lying within a second part $P_2$ of the given useful frequency band.

**5.** Method of modulation according to one of the preceding claims, **characterized in that** the given useful frequency band is the FM band.

**6.** Modulator of digital signals over a given useful frequency band implementing the method according to one of the claims 1 to 5.

**7.** Transmitter of digital signals on a given useful frequency band comprising at least one transmission chain comprising a modulator according to claim 6, **characterized in that** the transmission chain comprises an error corrector coder (10) conveying the coded digital signal $c^q[m]$ to the modulator (30).

**8.** Transmitter according to the preceding claim, **characterized in that** the transmission chain comprises an interleaver (20) placed between the error corrector coder (10) and the modulator (30).

**9.** Transmitter according to one of the claims 7 or 8, **characterized in that** a distinct set of channels $\{C_n^q\}$ is associated with each of the transmission chains.

**10.** Use of the transmitter after one of the claims 7 to 9 conveying digital signals in the FM band.

Fig. 1

Fig. 2

Fig. 3

Fig. 4

$s[m]$ → | 81 | → $\hat{b}_1$ → | 82 | → $\hat{s}[m]$

$\vdots$

$\hat{b}_N$

**80**

## Fig. 5

$d^1[m]$ → | $10^1$ | → $c^1[m]$ → | $20^1$ | → $s^1[m]$ → | $30^1$ | → $b_1^1$ / $b_N^1$ → | 50 |

$\circ$
$\circ$
$\circ$

$d^Q[m]$ → | $10^Q$ | → $c^Q[m]$ → | $20^Q$ | → $s^Q[m]$ → | $30^Q$ | → $b_1^Q$ / $b_N^M$

## Fig. 6

60 → | 70 | → | 80 | → $\hat{s}^Q[m]$ → | 90 | → $\hat{c}^Q[m]$ → | 100 | → $\hat{d}^Q[m]$

## Fig. 7

**EP 1 573 996 B1**

## RÉFÉRENCES CITÉES DANS LA DESCRIPTION

**Documents brevets cités dans la description**

- WO 0031939 A